# EUROPEAN PATENT APPLICATION

(11) **EP 1 728 484 A1**
(43) Date of publication of application: **06.12.2006**
(21) Application number: 05721363.9
(22) Date of filing: 16.03.2005
(51) Int. Cl.: A61C 7/00, A61C 7/20

(54) **ORTHODONTIC BASE**

(30) Priority: 23.03.2004 JP 2004084569
(71) Applicant: DENTSPLY-SANKIN K.K., Ohtawara-shi, Tochigi 324-0036 (JP)
(72) Inventor: OHKI, Toshimitsu, c/o Dentsply-Sankin k.k., Ohtawaera-shi, Tochigi 324-0036 (JP); SHIN, Yoshiharu, c/o Dentsply-Sankin k.k., Ohtawaera-shi, Tochigi 324-0036 (JP); TAKAKI, Takashi, Funabashi-shi, Chiba (JP); NISHII, Yasushi, Chiba-shi, Chiba (JP)
(74) Representative: Laufer, Gabriele
(86) International application number: PCT/JP2005/005313
(87) International publication number: WO 2005/089668

(57) **Abstract**

A supporting body for use in an orthodontic appliance comprises an anchor member (12) for being fixed in a bone (18), a screw member (14) to be engaged into a female screw part (26) of the anchor member (12), and a holder (16) to be supported on the anchor member (12). The holder (16) is fixed on the anchor member (12) as the screw member (14) is in tight contact with the female screw part (26) of the anchor member (12). The holder (16) can be detached from the anchor member (12) as the screw member (14) is in loose contact with the female screw part (26) of the anchor screw (12) but still lying in the female screw part (26) of the anchor screw (12).

## Description

### BACKGROUND OF THE INVENTION

The present invention relates to a supporting body for use in orthodontic appliance.

### RELATED ART

There is a screw type or plate type implant body (implant member) as a supporting body for use in orthodontic appliance.

For example, Japanese patent unexamined publication No.11-164843 discloses a plate type implant body as a supporting body for use in orthodontic appliance, in which mirror processing is performed on a surface of a movable part penetrating mucous membrane.

When attaching an orthodontic apparatus with an implant body, a hole or hook provided on top of the implant boy has been used, or an abutment or connecting member has been caulked or directly screwed.

An implant body for a palate of Straumann Orthosystem is known. A bar with a shape corresponding to a shape of an upper part of the implant body is fitted on such an implant body, and then a cover cap is mounted thereon and screwed. Or, a wire is brazed directly on the cover cap and screwed.

Other screw type implant bodies are described in Japanese patent unexamined publication No.2001-187071 and Japanese patent unexamined publication No.10-99347.

However, since elements of the support body for use in orthodontic appliance are very small, operation in the mouth is troublesome. Particularly in a support body for use in orthodontic appliance in which an orthodontic apparatus is screwed on an implant body, since a screw member is small, there is a danger of dropping into the mouth to drink by mistake when attaching and detaching the orthodontic apparatus.

### SUMMARY OF THE INVENTION

The present invention has an object to provide a support body for use in orthodontic appliance, which can be operated safely and easily in a mouth.

A support body for use in orthodontic appliance according to the present invention is described in each of claims 1 to 12.

In a support body for use in orthodontic appliance according to claim 1, orthodontic operation in the mouth can be easily done. When fixing an anchor member on a desired bone in the mouth and attaching a holder on the anchor member, the holder can be attached and detached relative to the anchor member only by tightening/loosening a screw member relative to a female screw part of the anchor member. Therefore, it can prevent the screw member from dropping into the mouth reliably.

In a preferred embodiment, an expansion part of the anchor member is arranged between a bearing surface of the screw member and the holder. In this case, particularly, the screw member is difficult to loosen.

In a preferred embodiment, a bearing surface of the screw member is tapered. In this case, the screw member easily wedges into the anchor member and easily supports the holder. In addition, the screw member is difficult to loosen. Since the screw member does not directly fix the holder, the holder, namely the orthodontic apparatus is difficult to influence on it, and difficult to loosen.

In a preferred embodiment, the anchor member has an expansion part, and the expansion part is configured as a tubular part with a slit. Therefore, the anchor member can be easily expanded. One end of the slit may be opened, while the other end may be provided with a hole having a diameter larger than a width of the slit. Or, the number of the slit may be increased. Then, the anchor member can be expanded more easily.

In a preferred embodiment, a through hole of the holder is tapered to hardly lose.

In one mode of the present invention, the supporting body for use in an orthodontic appliance comprises an anchor member for being fixed in a bone, a screw member to be engaged into a female screw part of the anchor member, and a holder to be supported on the anchor member. The holder is fixed on the anchor member as the screw member is in tight contact with the female screw part of the anchor member. The holder can be detached from the anchor member as the screw member is in loose contact with the female screw part of the anchor screw but still lying in the female screw part of the anchor screw.

In another mode of the present invention, a supporting body for use in an orthodontic appliance comprises an anchor member for being fixed in a bone, a screw member to be engaged into a female screw part of the anchor member, and a holder to be supported on the anchor member. The anchor member has an expansion part, the screw member being tightened into the female screw part of the anchor member, thereby expanding the expansion part of the anchor member being to fix the holder. The screw member is loosened relative to the female screw part of the anchor member, thereby detaching the holder from the anchor member as the screw member is lying in the female screw part of the anchor screw.

Preferably, an expansion part of the anchor member is arranged between a bearing surface of the screw member and the holder, while a bearing surface of the screw member is tapered. In addition, a part from a under head to threaded portion of the screw member may be tapered, or a threaded portion may be tapered to form a cone screw.

Preferably, both of the screw member and anchor member are tapered. However, the present invention includes a shape other than the tapered shape or tapering either of the screw member or expansion part of the anchor member.

The expansion part of the anchor member may be tapered.

Preferably, the anchor member has an expansion part, the expansion part being tapered as a tubular part with a slit. One end of the slit can be open, while the other end can be provided with a hole having a diameter larger than a width of the slit. In addition, the expansion part can be configured as a tubular part having a wide space. Preferably, the maximum outer diameter of the screw member is smaller than the maximum outer diameter of the expansion part.

The holder can be configured so that it has a through hole and that the anchor member is pressed and fixed on the circumferential surface of the through hole of the holder.

The word of taper admits of widest interpretation.

Although the support body for use in orthodontic appliance is preferably metallic, it may be resinous. Although it is preferably fixed in the bone of the palate, it can be fixed on the other parts.

### BRIEF DESCRIPTION OF THE DRAWINGS

Figure 1 is a cross sectional view illustrating one example of a support body for use in orthodontic appliance according to the present invention.
Figure 2A is a top view of Figure 1.
Figure 2B is a top view illustrating one example of relationship between the wire holder and the wire.
Figure 2C is a cross sectional view along line B-B of figure 2B.
Figure 2D is a top view illustrating one example of the anchor screw 12.
Figure 2E is a cross sectional view along line C-C of figure 2D.
Figure 3 is a top view illustrating another example of a support body for use in orthodontic appliance according to the present invention.
Figure 4 is a cross sectional view along line D-D of figure 3.
Figure 5 is a view illustrating another example of a support body for use in orthodontic appliance according to the present invention.
Figure 6A is an explanatory drawing for explaining treatment using the anchor screw and wire holder of figure 5.
Figure 6B is a top view of the cover.
Figure 6C is a cross sectional view along line G-G of figure 6B.
Figure 7 is a top view illustrating an example of an anchor screw as an anchor member of the present invention.
Figure 8 is a cross sectional view along line H-H of figure 7.
Figure 9 is a top view illustrating an example of an expansion screw as a screw member of the present invention.
Figure 10 is a side view of figure 9.
Figure 11 is a view illustrating an example of treatment using a support body for use in orthodontic appliance of the present invention.
Figure 12 is a view illustrating an example of treatment using another support body for use in orthodontic appliance of the present invention.
Figure 13 illustrates a variant of a wire holder.

### EMBODIMENT 1

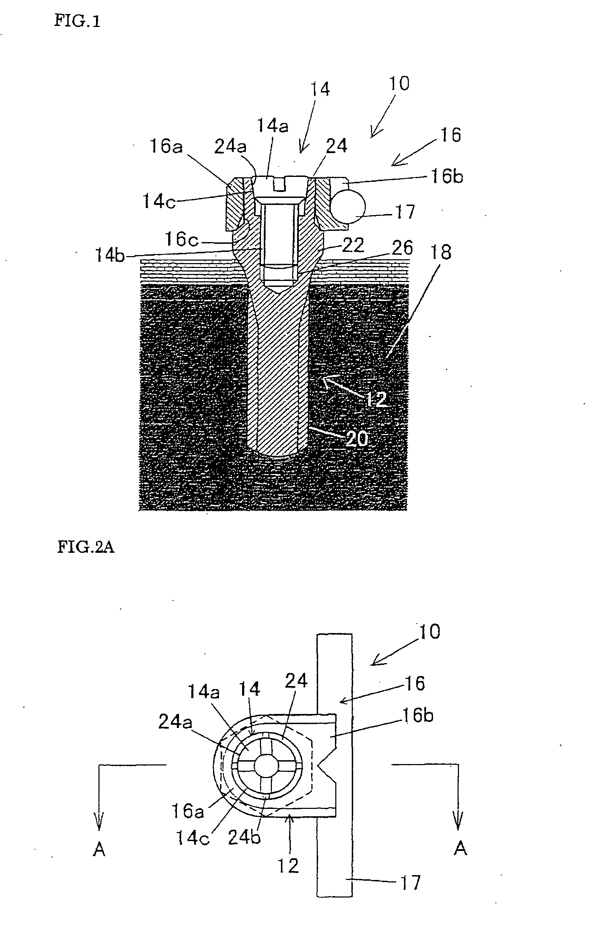

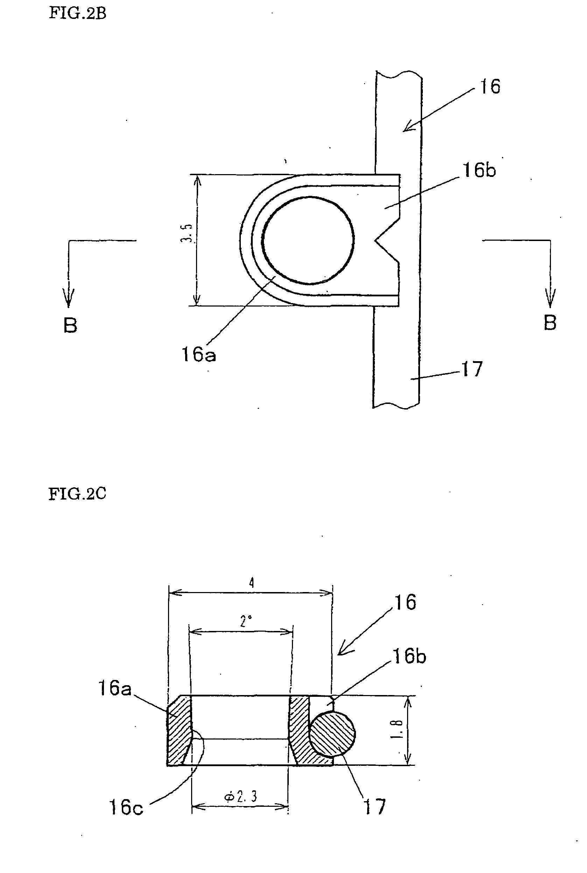

Figure 1 is a cross sectional view illustrating one example of a support body for use in orthodontic appliance according to the present invention. Figure 1 corresponds to a cross sectional view along line A-A of figure 2A.

A support body 10 for use in orthodontic appliance comprises an anchor screw 12, expansion screw 14, and wire holder 16. The anchor screw 12, expansion screw 14, and wire holder 16 correspond to an anchor member, screw member, and holder according to the present invention, respectively.

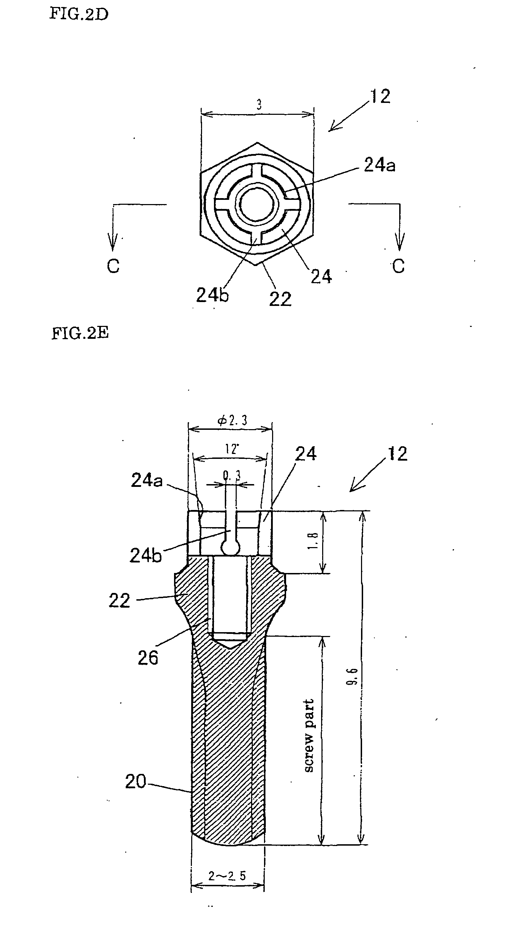

The anchor screw 12 is made of metallic rigid member, and comprises a male screw part 20, intermediate part 22, and tubular part 24 as an expansion part of the present invention. Figure 2B is a top view illustrating one example of a relationship between the wire holder 15 and the wire 17. Figure 2C is a cross sectional view along line B-B of figure 2B. Figure 2D is a top view illustrating one example of the anchor screw 12. Figure 2E is a cross sectional view along line C-C of figure 2D.

A lower part of the anchor screw 12 is configured as the male screw part 20. The male screw part 20 is buried in a palate 18 as a bone and used for implanting the anchor screw 12.

A middle area of the anchor screw 12 is configured as the intermediate part 22. The intermediate part 22 has a slightly large outer diameter compared to the male screw part 20 or tubular part 24. An upper outside of the intermediate part 22 is configured so that the lower end of the wire holder 16 is mounted thereon.

An upper part of the anchor screw 12 is configured as the tubular part 24. The tubular part 24 has certain flexibility and is used for fixing the wire holder 16.

An inner circumferential surface 24a of the tubular part 24 is tapered. The inner circumferential surface 24a is a smooth surface expanding upwardly. A cone angle of the inner circumferential surface 24a is 12 degrees.

The tubular part 24 has a plurality of slits 24b opening upwardly at radially regular spaces. The plurality of slits 24b are provided for easily deforming (expanding) the tubular part 24. At each lower end of the slits 24b, a hole having a diameter larger than a width of the slit 24b is provided. The holes allow the tubular part 24 to further easily deform (expand).

Although the number of the slits is four in the illustrated example, it is not limited to such. Four or more slits are preferred.

Inside the anchor screw 12, a female screw part 26 is provided for the expansion screw 14.

The expansion screw 14 has a head part 14a and male screw part 14b.

A bearing surface 14c of the head part 14a is tapered and corresponds to the inner circumferential surface 24a of the tubular part 24.

The male screw part 14b corresponds to the female screw part 26. As a result of such configuration, the expansion screw 14 is tightened into the anchor screw 12.

The wire holder 16 comprises a fixing part 16a and holding part 16b.

The fixing part 16a has a through hole at the inside thereof. A circumferential surface 16c of the through hole corresponds to the outer circumferential surface of the tubular part 24.

The holding part 16b is used for holding the wire 17 for use in orthodontic appliance at a side thereof.

One example of the treatment using the support body 10 for use in orthodontic appliance will be explained.

The expansion screw 14 is loosely engaged with the anchor screw 12. In other words, the expansion screw 14 is loosened relative to the female screw part 26 of the anchor screw 12, but still lying in the female screw part 26 of the anchor screw 12. In such a situation, the tubular part 24 is not expanded.

The wire holder 16 is mounted on the anchor screw 12. Since the diameter of the through hole of the wire holder 16 is larger than the maximum outer diameter of the expansion screw 14, the wire holder 16 can be mounted on the anchor screw 12 freely.

The expansion screw 14 is tightened into the anchor screw 12. The tubular part 24 of the anchor screw 12 is expanded and in contact with the wire holder 16. Thus, the wire holder 16 is fixed on the anchor screw 12. Furthermore, since the through hole 16c of the wire holder 16 is tapered, it hardly loses.

Therefore, when fixing the wire holder 16 on the anchor screw 12, one has only to tighten the expansion screw 14 into the anchor screw 12. When detaching the wire holder 16 from the anchor screw 12, one has only to loosen the expansion screw 14. In other words, attaching and detaching the wire holder 16 can be done only by tightening/loosening the expansion screw 14 relative to the anchor screw 12. If irregularities are formed around the through hole of the holder, it can bear some turning force. Further, a wire holder 16 with a circular outer shape may fix a wire 17 with a semicircular concave part.

### EMBODIMENT 2

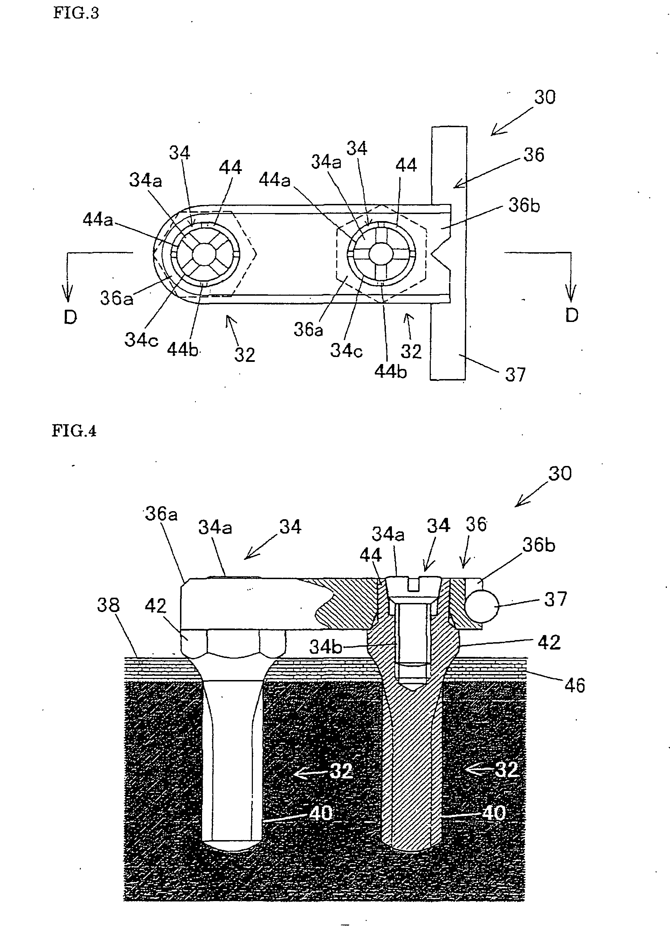

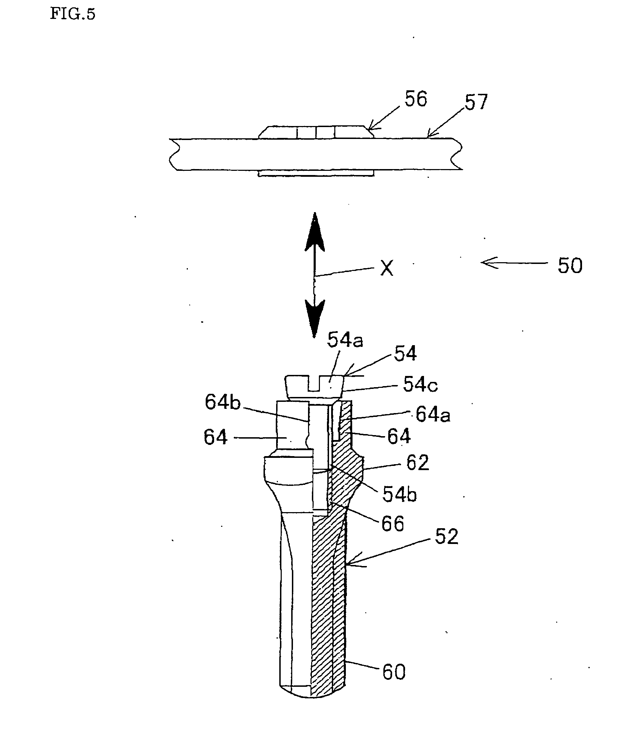

Figure 3 is a top view illustrating another example of a support body for use in orthodontic appliance according to the present invention. Figure 4 is a cross sectional view along line D-D of figure 3.

A support body 30 for use in orthodontic appliance comprises two pairs of anchor screws 32, expansion screws 34, and wire holders 36. The anchor screw 32, expansion screw 34, and wire holder 36 correspond to the anchor member, screw member, and holder of the present invention, respectively.

Each of the anchor screws 32 is made of metallic rigid member and comprises a male screw part 40, intermediate part 42, and tubular part 44 as an expansion part of the present invention.

A lower part of the anchor screw 32 is configured as the male screw part 40. The male screw part 40 is buried in a palate 38 as a bone and used for implanting the anchor screw 32.

A middle area of the anchor screw 32 is configured as the intermediate part 42. The intermediate part 42 has a slightly large outer diameter compared to the male screw part 40 or tubular part 44. An upper outside of the intermediate part 42 is configured so that the lower end of the wire holder 36 is mounted thereon.

An upper part of the anchor screw 32 is configured as the tubular part 44. The tubular part 44 has certain flexibility and is used for fixing the wire holder 36.

An inner circumferential surface (not illustrated) of the tubular part 44 is tapered. The inner circumferential surface is a smooth surface expanding upwardly.

The tubular part 44 has a plurality of slits 44b opening upwardly at radially regular spaces. The plurality of slits 44b are provided for easily deforming (expanding) the tubular part 44.

Inside the anchor screw 32, a female screw part 46 is provided for the expansion screw 34.

The expansion screw 34 has a head part 34a and male screw part 34b.

A bearing surface of the head part 34a is tapered and corresponds to the inner circumferential surface of the tubular part 44.

The male screw part 34b corresponds to the female screw part 34a. As a result of such configuration, the expansion screw 34 is tightened into the anchor screw 32.

The wire holder 36 comprises two fixing parts 36a and a holding part 36b.

Each of the two fixing parts 36a has a through hole. A circumferential surface 36c of the through hole corresponds to the outer circumferential surface of the tubular part 44. Here, the diameter of the through hole is larger than the outer diameter of the expansion screw 34.

The holding part 36b is used for holding the wire 37 for use in orthodontic appliance at a side thereof.

One example of treatment using the support body 30 for use in orthodontic appliance will be explained.

The expansion screws 34 are loosely engaged with the anchor screws 32. In other words, the expansion screws 34 are loosened relative to the female screw parts 34a of the anchor screws 32, but still lying in the female screw parts 34a of the anchor screws 32. In such a situation, the tubular parts 44 are not expanded.

The wire holder 36 is mounted on the anchor screws 32. Since each maximum outer diameter of the expansion screws 34 is smaller than the maximum outer diameters of the tubular parts 44, the wire holder 36 can be freely mounted on the anchor screws 32.

The expansion screws 34 are tightened into the anchor screws 32. The tubular parts 44 of the anchor screws 32 are expanded and in contact with the wire holder 36. Thus, the wire holder 36 is fixed on the anchor screws 32. In addition, since the through holes of the wire holder 36 are tapered, they hardly lose.

Therefore, when fixing the wire holder 36 on the anchor screws 32, one has only to tighten the expansion screws 34 into the anchor screws 32. When detaching the wire holder 36 from the anchor screws 32, one has only to loosen the expansion screws 34. In other words, attaching and detaching the wire holder 36 can be done only by tightening/loosening the expansion screws 34 relative to the anchor screws 32.

Particularly, since the wire holder 36 is fixed on the two anchor screws 32, it does not rotate with respect to the expansion screws 34. The wire 37 can be rigidly fixed.

### EMBODIMENT 3

Figure 5 is a view illustrating another example of a support body for use in orthodontic appliance according to the present invention.

A support body 50 for use in orthodontic appliance comprises an anchor screw 52, expansion screw 54, and wire holder 56. The anchor screw 52, expansion screw 54, and wire holder 56 correspond to an anchor member, screw member, and holder according to the present invention, respectively.

The anchor screw 52 is made of metallic rigid member, and comprises a male screw part 60, intermediate part 62, and tubular part 64 as an expansion part of the present invention.

A lower part of the anchor screw 52 is configured as the male screw part 60. The male screw part 60 is buried in a bone that is not illustrated in the figure and used for implanting the anchor screw 52.

A middle area of the anchor screw 52 is configured as the intermediate part 62. The intermediate part 62 has a slightly large outer diameter compared to the male screw part 60 or tubular part 64. An upper outside of the intermediate part 62 is configured so that the lower end of a wire holder 56 is mounted thereon.

An upper part of the anchor screw 52 is configured as the tubular part 64. The tubular part 64 has certain flexibility and is used for fixing the wire holder 56.

An inner circumferential surface 64a of the tubular part 64 is tapered. The inner circumferential surface 64a is a smooth surface expanding upwardly.

The tubular part 64 has a plurality of slits 64b opening upwardly at radially regular spaces. The plurality of slits 64b are provided for easily deforming (expanding) the tubular part 64.

Inside the anchor screw 52, a female screw part 66 is provided for the expansion screw 54.

The expansion screw 54 has a head part 54a and male screw part 54b.

A bearing surface 54c of the head part 54a is tapered and corresponds to the inner circumferential surface 64a of the tubular part 64.

The male screw part 54b corresponds to the female screw part 66. As a result of such configuration, the expansion screw 54 is tightened into the anchor screw 52.

The wire holder 56 has a through hole (not illustrated). A circumferential surface 56c of the through hole is tapered and corresponds to the outer shape of the tubular part 64. Here, the diameter of the through hole is larger than the maximum outer diameter of the expansion screw 54.

An orthodontic apparatus 57 is made of a wire for use in orthodontic appliance etc, and used by attaching parts for orthodontic appliance. The orthodontic apparatus 57 is brazed with the wire holder 56 and attached to the anchor screw 52.

One example of treatment using the support body 50 for use in orthodontic appliance will be explained.

The expansion screw 54 is loosely engaged with the anchor screw 52. In other words, the expansion screw 54 is loosened relative to the female screw part 66 of the anchor screw 52, but still lying in the female screw part 66 of the anchor screw 52. In such a situation, the tubular part 64 is not expanded.

The wire holder 56 is moved along an arrow X and mounted on the anchor screw 52. Since the diameter of the through hole of the wire holder 56 is larger than the maximum outer diameter of the expansion screw 54, the wire holder 56 can be freely mounted on the anchor screw 52.

The expansion screw 54 is tightened into the anchor screw 52. The tubular part 64 of the anchor screw 52 is expanded and in contact with the wire holder 56. Thus, the wire holder 56 is fixed on the anchor screw 52.

Therefore, when fixing the wire holder 56 on the anchor screw 52, one has only to tighten the expansion screw 54 into the anchor screw 52. When detaching the wire holder 56 from the anchor screw 52, one has only to loosen the expansion screw 54. In other words, attaching and detaching the wire holder 56 can be done only by tightening/loosening the expansion screw 54 relative to the anchor screw 52.

### EMBODIMENT 4

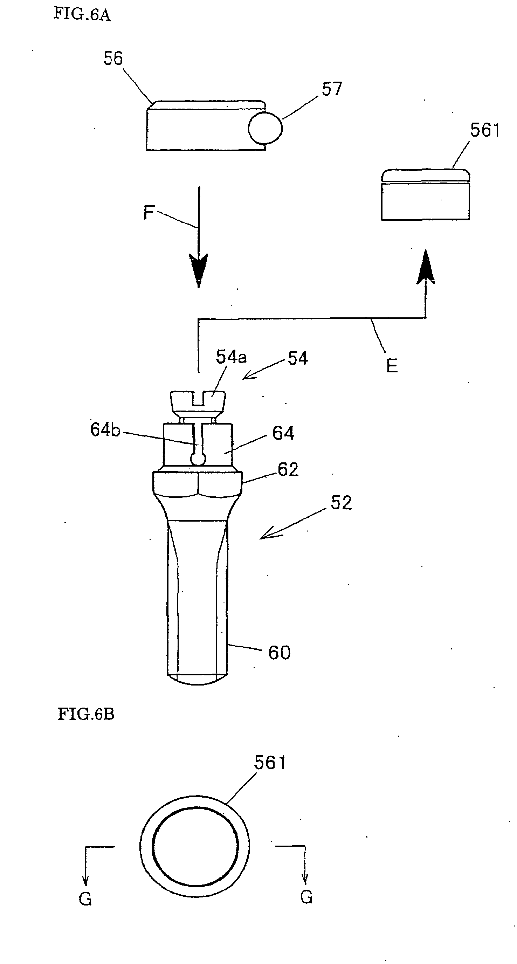

Figure 6A is an explanatory drawing for explaining one example of treatment using the anchor screw 52 and wire holder 56 of figure 5.

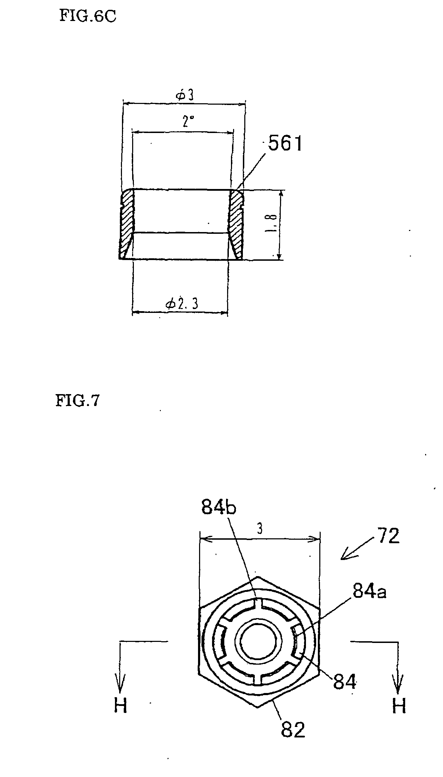

Numeral 561 in the figure indicates a cover. The cover 561 is mounted on top of the anchor screw 52. A shape of a through hole of the cover 561 is basically the same as that of the wire holder 56. Figure 6B is a top view of the cover. Figure 6C is a cross sectional view along line G-G of figure 6B.

When using the anchor screw 52, for example, the anchor screw 52 is implanted in a mouth, and then left as it is for a while. At this time, the cover 561 is attached on top of the anchor screw 52 (not illustrated).

After the surrounding bone becomes stable, the cover 561 attached is detached (arrow E).

The wire holder 56 brazed with the orthodontic apparatus (wire) 57 is attached on the anchor screw 52 (arrow F).

The wire holder 56 brazed with the orthodontic apparatus (wire) 57 is sometimes attached and detached repeatedly as making progress of treatment. The cover 561 is firstly attached and then exchanged with the wire holder 56. The wire holder 56 may be configured identically to the cover 561 and brazed with the orthodontic apparatus (wire) 57.

### EMBODIMENT 5

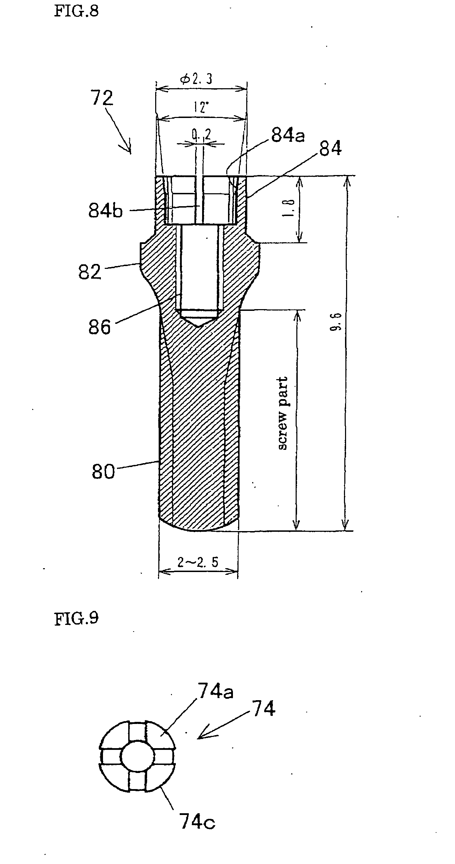

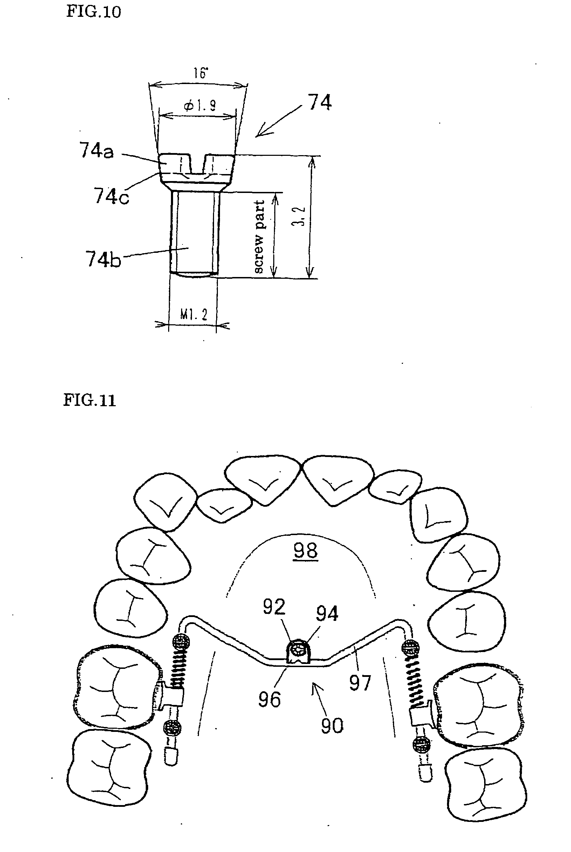

Figures 7, 8 are an example of an anchor member used in the support body for use in orthodontic appliance according to the present invention. Figures 9, 10 are an example of a screw member used in the support body for use in orthodontic appliance according to the present invention.

Figure 7 is a top view illustrating an example of an anchor screw as an anchor member of the present invention. Figure 8 is a cross sectional view along line H-H of figure 7.

An anchor screw 72 is made of metallic rigid member, and comprises a male screw part 80, intermediate part 82, and tubular part 84 as an expansion part of the present invention.

A lower part of the anchor screw 72 is configured as the male screw part 80. The male screw part 80 is buried in a bone that is not illustrated in the figure and used for implanting the anchor screw 72.

A middle area of the anchor screw 72 is configured as the intermediate part 82. The intermediate part 82 has a slightly large outer diameter compared to the male screw part 80 or tubular part 84. An upper outside of the intermediate part 82 is configured so that the lower end of a holder (not illustrated) is mounted thereon.

An upper part of the anchor screw 72 is configured as the tubular part 84. The tubular part 84 has certain flexibility and is used for fixing the holder.

An inner circumferential surface 84a of the tubular part 84 is tapered. The inner circumferential surface 84a is a smooth surface expanding upwardly. A cone angle of the inner circumferential surface 84a is 12 degrees.

The tubular part 84 has six slits 84b opening upwardly at radially regular spaces. In the case of the six slits 84b, the tubular part 84 is more easily deformed (expanded) than in the case of the four slits.

Inside the anchor screw 72, a female screw part 86 is provided for the expansion screw 74.

Figure 9 is a top view illustrating an example of an expansion screw as a screw member of the present invention. Figure 10 is a side view of figure 9.

The expansion screw 74 has a head part 74a and male screw part 74b.

A bearing surface 74c of the head part 74a is tapered and corresponds to the inner circumferential surface 84a of the tubular part 84. In the embodiment illustrated in the figure, a cone angle of the head part 74 is 16 degrees.

The male screw part 74b corresponds to the female screw part 86. As a result of such configuration, the expansion screw 74 is tightened into the anchor screw 72.

### EMBODIMENT 6

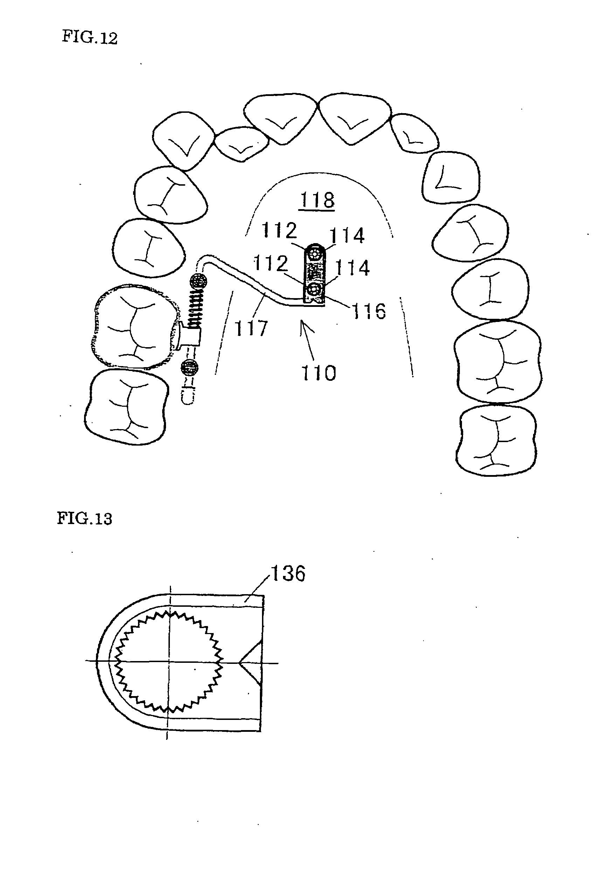

Figure 11 is a view illustrating an example of treatment using a support body for use in orthodontic appliance of the present invention.

A support body 90 for use in orthodontic appliance is fixed in a palate 98 and used for centrifugal movement of molars.

The support body 90 for use in orthodontic appliance comprises an anchor screw 92, expansion screw 94, and wire holder 96. Constitutions described in the foregoing embodiments can be adopted in the constitution of the anchor screw 92, expansion screw 94, and wire holder 96.

A wire 97 is attached to the wire holder 96. Tubes and coil springs are attached on the wire holder 97. As a result of such configuration, centrifugal movement of molars is done.

When detaching the wire holder 96 from the anchor screw 92, one has only to loosen the expansion screw 94. When fixing the wire holder 96 on the anchor screw 92, one has only to tighten the expansion screw 94 after the wire holder 96 is mounted on the anchor screw.

### EMBODIMENT 7

Figure 12 is a view illustrating an example of treatment using another support body for use in orthodontic appliance of the present invention.

A support body 110 for use in orthodontic appliance is fixed in a palate 118 and used for centrifugal movement of only one side of a molar.

The support body 110 for use in orthodontic appliance comprises anchor screws 112, expansion screws 114, and wire holder 116. Constitutions described in the foregoing embodiments can be adopted as a constitution of the anchor screws 112, expansion screws 114, and wire holder 116.

A wire 117 is attached to the wire holder 116. A tube and a coil spring are attached on the wire holder 117. As a result of such configuration, centrifugal movement of only one side of a molar is done.

When detaching the wire holder 116 from the anchor screws 112, one has only to loosen the expansion screws 114. When fixing the wire holder 116 on the anchor screws 112, one has only to loosen the expansion screws 114 after the wire holder 116 is mounted on the anchor screws.

Figure 13 illustrates a variant of a wire holder. If irregularities are formed around a through hole of a wire holder 136, even one anchor screw can prevent rotation to some extent.

The present invention is not limited to the embodiments illustrated in the figures. A screw member, anchor member, and holder can be optionally formed within the scope of the present invention.

## Claims

1. A supporting body for use in an orthodontic appliance comprising:
an anchor member (12) for being fixed in a bone (18), a screw member (14) to be engaged into a female screw part (26) of the anchor member (12), and a holder (16) to be supported on the anchor member (12),
wherein the holder (16) is fixed on the anchor member (12) as the screw member (14) is in tight contact with the female screw part (26) of the anchor member (12), and
wherein the holder (16) can be detached from the anchor member (12) as the screw member (14) is in loose contact with the female screw part (26) of the anchor screw (12) but still lying in the female screw part (26) of the anchor screw (12).

2. A supporting body for use in an orthodontic appliance comprising:
an anchor member (12) for being fixed in a bone (18), a screw member (14) to be engaged into a female screw part (26) of the anchor member (12), and a holder (16) to be supported on the anchor member (12),
wherein the anchor member (12) has an expansion part (24), the screw member (14) being tightened into the female screw part (26) of the anchor member (12), thereby expanding the expansion part (24) of the anchor member (12) to fix the holder (16), and
wherein the screw member (14) is loosened relative to the female screw part (26) of the anchor member (12), thereby detaching the holder (16) from the anchor member (12) as the screw member (14) is lying in the female screw part (26) of the anchor screw (12).

3. The supporting body for use in an orthodontic appliance according to claim 1 or 2, wherein an expansion part (24) of the anchor member (12) is arranged between a bearing surface (14c) of the screw member (14) and the holder (16).

4. The supporting body for use in an orthodontic appliance according to anyone of claims 1 to 3, wherein a bearing surface (14c) of the screw member (14) is tapered.

5. The supporting body for use in an orthodontic appliance according to anyone of claims 1 to 4, wherein an expansion part (24) of the anchor member (12) is arranged between a bearing surface of the screw member (14) and the holder (16), and wherein the expansion part (24) of the anchor member (12) is tapered correspondingly to a bearing surface (14c) of the screw member (14).

6. The supporting body for use in an orthodontic appliance according to anyone of claims 1 to 5, wherein an expansion part of the anchor member (12) is configured as a tubular part (24) with a slit (24b).

7. The supporting body for use in an orthodontic appliance according to claim 6, wherein one end of the slit (24b) is open, while the other end is provided with a hole having a diameter larger than a width of the slit (24b).

8. The supporting body for use in an orthodontic appliance according to anyone of claims 1 to 7, wherein the holder (16) has a through hole, the anchor member (12) being pressed against a circumferential surface (16c) of the through hole of the holder (16), thereby fixing the holder (16) on the anchor member (12).

9. The supporting body for use in an orthodontic appliance according to claim 8, wherein a diameter of the through hole of the holder (16) is larger than a maximum outer diameter of the screw member (14).

10. The supporting body for use in an orthodontic appliance according to anyone of claims 8 or 9, wherein the through hole of the holder (16) is tapered to hardly lose.

11. The supporting body for use in an orthodontic appliance according to anyone of claims 8 to 10, wherein irregularities are formed on a circumferential surface of the through hole of the holder (136).

12. The supporting body for use in an orthodontic appliance according to anyone of claims 1 to 11, wherein two or more anchor members are used, the anchor members being connected by the wire holder.
